# EUROPÄISCHE PATENTSCHRIFT

(11) **EP 2 453 136 B1**
(45) Veröffentlichungstag und Bekanntmachung des Hinweises auf die Patenterteilung: **24.07.2013**
(21) Anmeldenummer: 10014653.9
(22) Anmeldetag: 16.11.2010
(51) Int. Cl.: F03D 11/00

(54) **Ausrichtevorrichtung für Messeinrichtung in einem Windkraft-Rotor**
Alignment device for measuring devices in a wind turbine rotor
Dispositif d'alignement pour un dispositif de mesure dans un rotor d'éolienne

(43) Veröffentlichungstag der Anmeldung: 16.05.2012
(73) Patentinhaber: Baumer Innotec AG, 8500 Frauenfeld (CH)
(72) Erfinder: Weigel, Michael, 88142 Wasserburg (DE); Tiedeke, Joachim, CH-8280 Kreuzlingen (CH)
(74) Vertreter: Strauss, Steffen

(56) Entgegenhaltungen:
- WO-A1-2010/089139
- WO-A2-2009/143850
- DE-A1-102006 002 708

## Beschreibung

Die Erfindung bezieht sich auf einen Windkraft-Rotor mit Messeinrichtungen der Rotordurchbiegung und umfasst eine Nabe mit wenigstens einem Rotorblatt, einen Hohlraum zur Aufnahme der Messeinrichtung, mit einen Messhohlraum, der sich in Längsrichtung des Rotorblatts erstreckt, und eine Auswerteeinrichtung. Die Messeinrichtung weist einen Lichtstrahlsender zur Aussendung mindestens eines Strahlenbündels in Längsrichtung des Messhohlraumes, eine darin untergebrachte Reflektoreinrichtung und mindestens einen Empfänger zum Nachweis reflektierten Lichtes auf.

Ein derartiger Rotor einer Windenergieanlage ist aus DE 10 2006 002 708 B4 bekannt. Das Rotorblatt ist hohl und die Reflexionsmittel sind an der Außenwand oder am Mittelsteg des Rotorblattes angeordnet. Fluchtend zu dem Hohlraum sind in der Rotornabe eine Sendeeinheit und eine Empfangseinheit angeordnet und in einem gemeinsamen Gehäuse untergebracht. Die Befestigung dieses Gehäuses in der Rotornabe ist nicht dargestellt.

Um die Rotordurchbiegung zu messen, bedarf es einer genauen Ausrichtung zwischen Sender/Empfänger und Reflektor. Bei der Aufnahme des Senders und Empfängers im Rotor bedeutet dies sehr genau bearbeitete Aufnahmeflächen im Rotor. Es ist wünschenswert, dass der nutzbare Messbereich des Empfängers dem Durchbiegungsbereich des zugeordneten Rotorblattes entspricht. Dies würde sehr hohe Toleranzanforderungen bei der Herstellung der Nabe, des Rotorblattes und der Verbindung von Nabe und Rotorblatt und für die Befestigung des Gehäuses der Messeinrichtung bedeuten.

Der Erfindung liegt die Aufgabe zugrunde, eine Ausrichtevorrichtung zu schaffen, mit der eine bequeme und doch genaue Einstellung des Empfängers auf den Durchbiegungsbereich der Rotorblätter nach zwei Freiheitsgraden (Zenit- und Azimutwinkel) möglich ist und trotz der bequemen Einstellung die Fixierung des Empfängers in der Rotornabe steif und schwingungsarm erfolgen kann, ohne allzu hohe Forderungen an die Fertigungstoleranzen des Rotorblatts zu stellen.

Zur Lösung der gestellten Aufgabe wird eine Montage- oder Zwischenplatte benutzt, welche das Empfängergehäuse an drei Punkten haltert. Im Einzelnen ist das Gehäuse an der Zwischenplatte befestigt, die wiederum in der Nabe oder im Rotorblattbefestigt ist, und weist eine Ausrichtefläche auf, die der Zwischenplatte mit Zwischenraum gegenübersteht. An wenigstens und idealerweise drei Stellen des Zwischenraumes sind Abstandeinstelleinrichtungen vorgesehen, die den örtlichen Abstand der Ausrichtefläche von der Zwischenplatte einzustellen ermöglichen, was die Normale der Ausrichtefläche in Längsrichtung des Messhohlraumes auszurichten erlaubt. Es sei angemerkt, dass die Zwischenplatte an dem Nabenkörper, oder der Plattform des Rotorblatts befestigt ist oder einen Teil dieses Nabenkörpers oder Rotorblatts ausmacht.

Bei einer bevorzugten Ausführungsform ist die Ausrichtefläche Teil eines Gehäuseflansches und die Zwischenplatte ist mit einem Ausschnitt versehen, um das Gehäuse darin aufzunehmen. Durch diese Gestaltung ist die Rückseite des Gehäuses frei zugänglich, die ein Visionsfenster und diverse Anschlüsse aufweisen kann. Dies erleichtert die Überprüfung der Ausrichtung der Messeinrichtung und gewährt bequem Zugang zu Steueranschlüssen.

Gemäß einer Ausgestaltung der Erfindung umfasst jede Abstandeinstelleinrichtung einen Befestigungsschraubbolzen, eine Druckfeder und eine Konterschraube, wobei der Befestigungsschraubbolzen durch eine Durchsteckbohrung der Zwischenplatte hindurch greift und in eine Schraubbohrung des Gehäuses unter Zwischenlage der Druckfeder eingreift. Zum Festziehen des Schraubbolzens gibt es einen Schraubkopf oder eine Mutter. Die Konterschraube sitzt benachbart zu der Durchsteckbohrung in einer Schraubbohrung der Zwischenplatte und kann nach Justage des Empfängergehäuses in Anlage an der Ausrichtefläche gebracht werden. Die ziemlich steife Druckfeder sorgt für Spielfreiheit zwischen dem Kopf bzw. der Mutter des jeweiligen Befestigungsschraubbolzens und der Zwischenplatte und die Konterschraube macht die Einstelleinrichtung steif und rüttelfest, nachdem die Justage vorgenommen worden ist.

Es wird bevorzugt, Sender und Empfänger in einem gemeinsamen Gehäuse unterzubringen. Auf diese Weise kann man sich eine Extraeinstellung des Senders sparen.

In bevorzugter Ausbildung enthält der Empfänger wenigstens eine Abbildungsoptik, welche die Reflektoreinrichtung auf eine Nachweisebene oder einen Sensor abbildet. Wenn bei der Ablenkung des Rotorblattes das Reflektorbild von seiner neutralen Stellung abweicht, interpretiert die Auswerteeinrichtung dies als Biegung des Rotorblattes. Wenn die Auslenkung beispielsweise gefährliche Ausmaße annimmt, kann dies die Auswerteeinrichtung feststellen und die Windenergieanlage in die Ruhestellung steuern.

Die Reflektoreinrichtung kann zwei oder mehr Retroreflektoren in unterschiedlichen Abständen von dem Sender und Empfänger aufweisen. Diese Retroreflektoren werden an unterschiedlichen Stellen der Nachweisebene des Empfängers abgebildet.
Dadurch lässt sich der tatsächliche Durchbiegungsverlauf besser extrapolieren. Werden an jedem Messpunkt statt eines Reflektors, Reflektorpaare verwendet, kann zusätzlich die Torsion an dieser Stelle ermittelt werden.

Ein Ausführungsbeispiel der Erfindung wird anhand der Zeichnungen beschrieben. Dabei zeigt:
- Fig. 1a: eine Windenergieanlage mit Windkraft-Rotor und Messeinrichtung der Rotordurchbiegung, schematisch, in einer ersten Ausführungsform,
- Fig. 1b: die Windenergieanlage in einer zweiten Ausführungsform,
- Fig. 2: eine Prinzipskizze der Messung der Rotordurchbiegung,
- Fig. 3: die Anordnung von Retroreflektoren im Gesichtsfeld der Messeinrichtung,
- Fig. 4: eine Darstellung der Nachweisebene des Empfängers der Messeinrichtung,
- Fig. 5: eine perspektivische Darstellung des Gehäuses der Messeinrichtung im Zusammenwirken mit einer Ausrichtevorrichtung, und
- Fig. 6: eine Seitenansicht des Gehäuses und der Ausrichtevorrichtung.

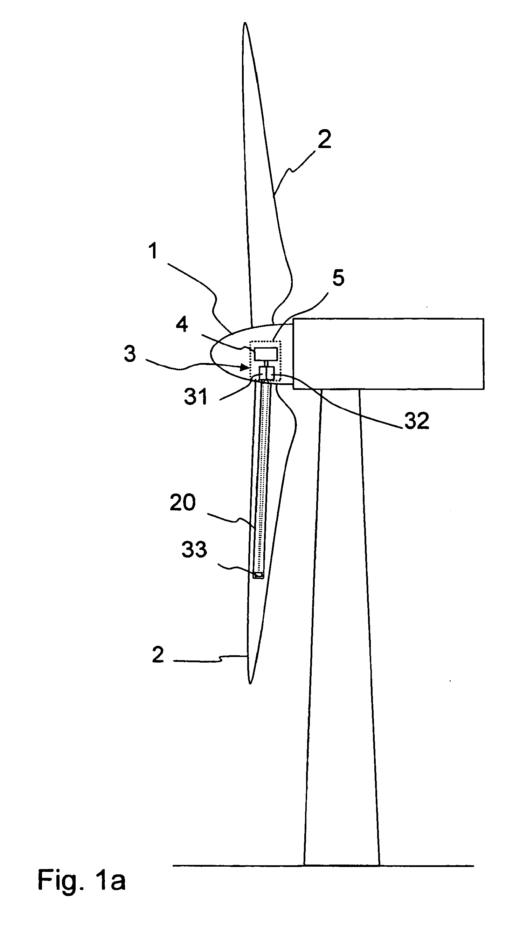

Fig. 1a zeigt eine Windenergieanlage mit einer Nabe 1 und mit Rotorblättern 2. Die Richtung der Rotorachse ist mit X, die Längserstreckung des Rotorblattes 2 mit Z und die Tangente zum Rotorumlauf mit Y gekennzeichnet. In einem Hohlraum 5 der Nabe 1 ist eine Messeinrichtung 3 zur Rotordurchbiegung angeordnet, uns zwar fluchtend zu einem Hohlraum 20, der sich in Längsrichtung des Rotorblattes 2 erstreckt. Die Messeinrichtung 3 umfasst einen Sender 31 und einen Empfänger 32, die vorzugsweise in einem gemeinsamen Gehäuse 50 untergebracht sind, und eine Reflektoreinrichtung 33, die in dem Messhohlraum 20 des Rotorblattes fixiert ist. Der Messeinrichtung 3 ist noch eine Auswerteeinrichtung 4 beigestellt, die im Falle von zu starken Rotordurchbiegungen anspricht und die Abbremsung der Windenergieanlage ansteuert.

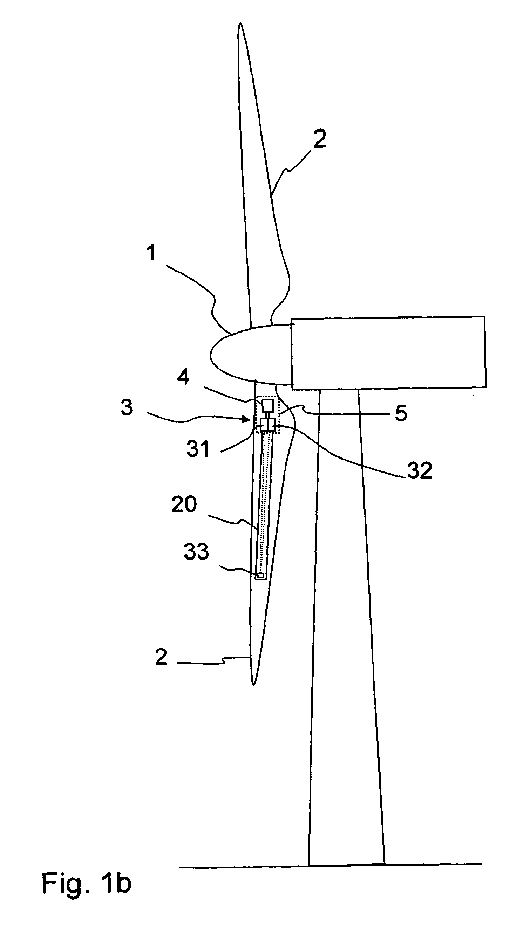

In der Ausführungsform der Windenregieanlage nach Fig. 1b ist der Hohlraum 5 zur Aufnahme der Messeinrichtung 3 beziehungsweise des Gehäuses 50 in dem Rotorblatt 2, das überwacht werden soll, untergebracht.

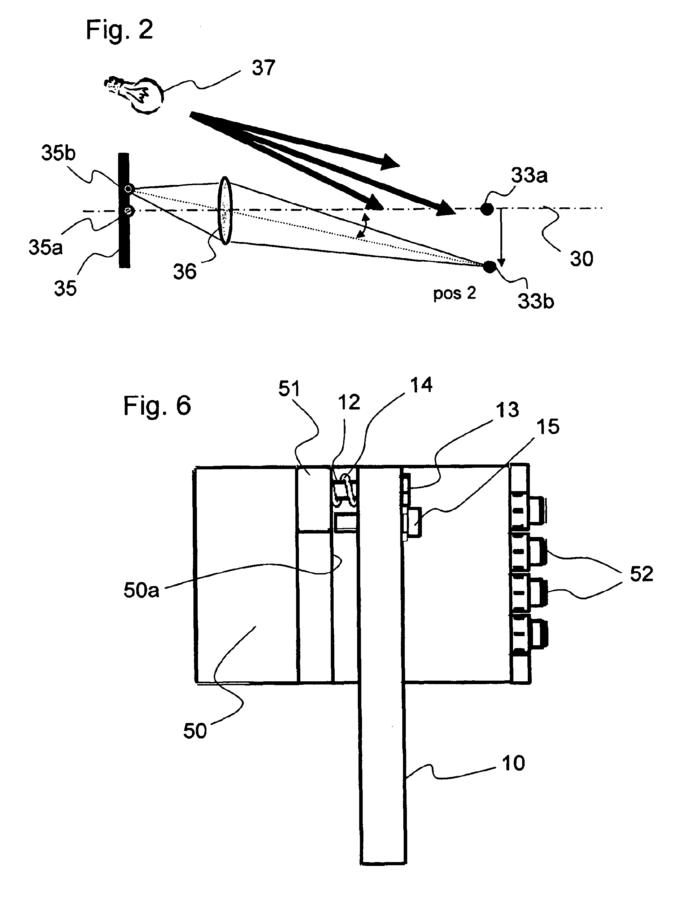

Fig. 2 ist eine schematische Darstellung der Messeinrichtung 3. Diese umfasst einen in der Nachweisebene angeordneten Sensor 35 und eine Abbildungsoptik 36 zur Abbildung des Reflektors 33 auf den Sensor 35. Es sind zwei Positionen des Reflektors 33a und 33b dargestellt, die in der Nachweisebene bei 35a und 35b abgebildet werden. Die Stellung 33a liegt in der optischen Achse 30 und kennzeichnet die neutrale Stellung des Rotors, während die Position 33b eine Auslenkstellung oder Durchbiegung des Rotors anzeigt. Der Bereich, in dem sich der Reflektor 33 befindet, wird von einer Lichtquelle 37 beschienen, die sichtbares Licht, aber auch eine andere Art von elektromagnetischer Strahlung aussenden kann.

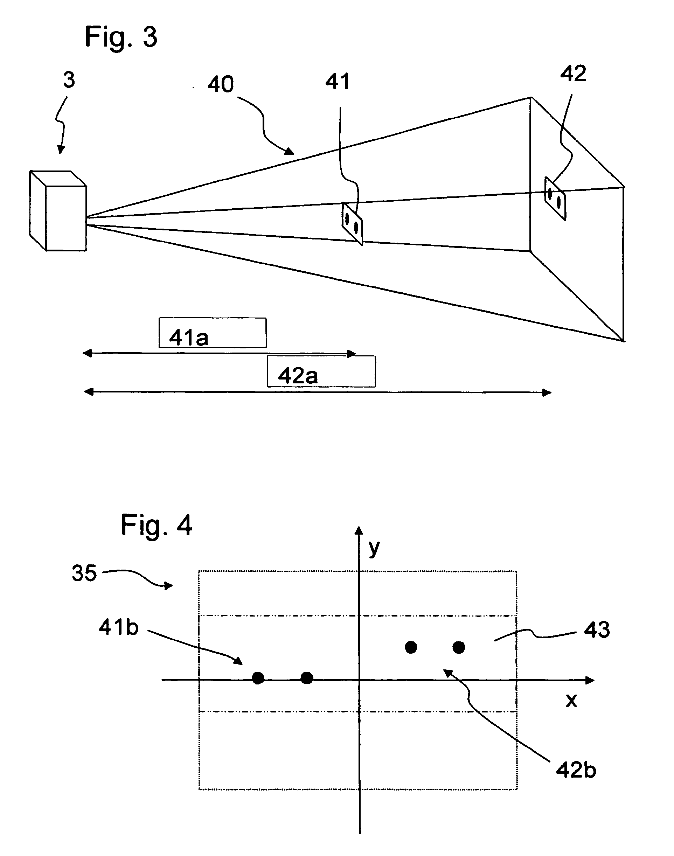

Fig. 3 zeigt das nutzbare Gesichtsfeld 40 der Messeinrichtung 3, jedoch nicht maßstabsgetreu. Als Reflektoreinrichtung sind zwei Retroreflektorpaare 41 und 42 im Abstand 41a und 42a von der Nachweisebene der Messeinrichtung 3 entfernt angeordnet. Die Nachweisebene bzw. der Sensor 35 ist in Fig. 4 in Draufsicht dargestellt. Die Bilder 41b und 42b der Auslenkungen der Retroreflektoren 41 und 42 sind in Fig. 4 angedeutet, ferner das Feld 43, innerhalb welchem sich das Bild des Retroreflektors 41 in der zulässigen Betriebsregie bewegen darf. Die Retroreflektorenpaare 41 beziehungsweise 42 ermöglichen die Messung der örtlichen Torsion.

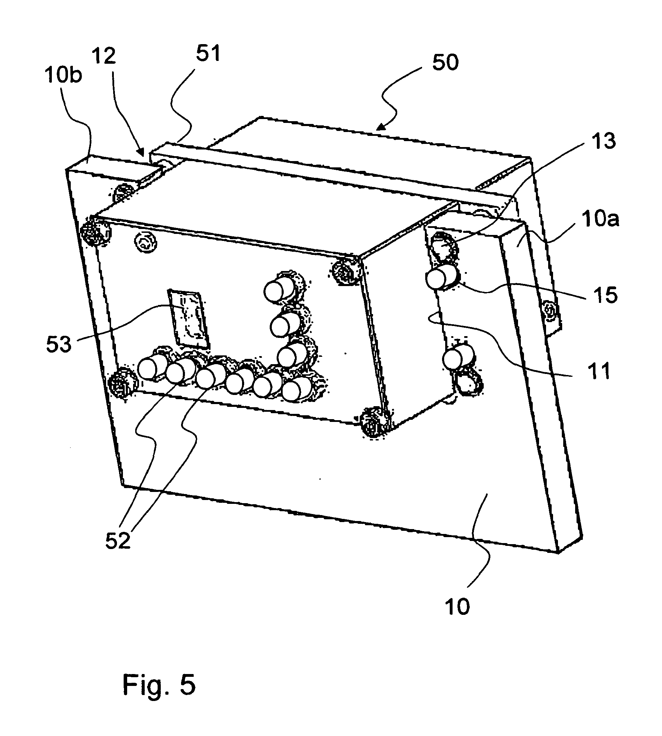

Die Fig. 5 und 6 zeigen das gemeinsame Gehäuse 50 für Sender 31 und Empfänger 32, gehaltert an einer Montage- oder Zwischenplatte 10. Diese Zwischenplatte 10 ist im Hohlraum befestigt, und zwar am Nabenkörper (Fig. 1a) oder an einer Plattform des Rotorblattes (Fig. 1b). Es ist auch möglich, dass die Zwischenplatte 10 einen Teil des Nabenkörpers bildet. Die Zwischenplatte 10 ist U-förmig gestaltet und umfasst einen Ausschnitt 11, in welchem das Gehäuse 50 aufgenommen wird. Das Gehäuse 50 kann beliebige Formen annehmen, besitzt jedoch einen vorstehenden Flansch 51, der sich parallel zur Zwischenplatte 10 erstreckt und den beiden Schenkeln 10a, 10b der U-förmigen Zwischenplatte 10 gegenübersteht. Das rückwärtige Ende des Gehäuses 50 ragt durch die Aussparung 11 hindurch und bietet so freien Zugang zu einer Reihe von Anschlüssen 52 sowie einem Fenster 53. Zwischen dem Gehäuseflansch 51 und der Zwischenplatte 10 befindet sich ein Zwischenraum 12, der durch Befestigungsmittel überbrückt ist, welche das Gehäuse 50 an der Zwischenplatte 10 halten.

Die Befestigungsmittel umfassen wenigstens und idealerweise drei im Abstand voneinander angeordneten Schraubbolzen 13, die mit etwas "Luft" durch zugeordnete Bohrungen in jeweiligen Schenkeln 10a, 10b der Zwischenplatte 10 hindurchreichen und in zugeordnete Schraubbohrungen des Gehäuseflansches 51 eingreifen. Der mittlere Abschnitt jeden Schraubbolzens 13 wird von einer Druckfeder 14 umgeben, die im Zwischenraum 12 gelegen ist und den Schraubkopf (oder die Mutter eines Stiftschraubbolzens) gegen die Zwischenplatte 10 und die Schraubwindungen des Schraubbolzens 13 gegen die entsprechenden Schraubwindungen der Schraubbohrung im Flansch 51 ziehen. Auf diese Weise wird Spielfreiheit in der Befestigungsverbindung zwischen dem Gehäuse 50 und der Zwischenplatte 10 erzielt. Indem der Kopfschraubbolzen 13 mehr oder weniger weit in den Gehäuseflansch 51 hineingeschraubt wird, wird wegen der Anlage des Kopfes an der Rückseite der Zwischenplatte 10 die Weite des Zwischenraumes 12 verändert. Der gleiche Effekt wird durch Anziehen der Mutter bei einem Stiftschraubbolzen erzielt. Da es wenigstens drei Schraubbolzen im Abstand voneinander gibt, kann die Winkelausrichtung des Gehäuseflansches 51 relativ zur Ebene der Zwischenplatte 10 ausgerichtet werden. Die eingestellte Lage wird dann durch Anziehen einer Konterschraube 15 rüttelfest gemacht, indem jegliche Nachgiebigkeit aus der Schraubverbindung zwischen dem Gehäuseflansch 51 und der Zwischenplatte 10 genommen wird.

Man kann die Rückseite des Gehäuseflansches 51 als eine Ausrichtefläche 50a ansehen, an der die Winkelausrichtung des Gehäuses 50 zu der Montage- oder Zwischenplatte 10 gemessen werden kann. Die optische Achse 30 ist idealerweise die Normale zu dieser Ausrichtefläche 50a.

Es versteht sich, dass die Ausrichtefläche 50a nicht unbedingt an einer Flanschfläche ausgebildet sein muss, brauchbar sind auch rahmenartige Teile der Vorder- oder Rückseite des Gehäuses 50.

Die Einstellung des Gehäuses 50 und damit die Einstellung der optischen Achse 30 des Empfängers 3 auf die Reflektoreinrichtung 33 im unverformten Zustand des Rotorblattes 2 wird so vorgenommen, dass das Bild 41b, 42b der Retroreflektoren 41 bzw. 42 in eine Ausgangsstellung innerhalb der Sensorebene gerückt wird. Wenn es später zu einer Auslenkung bzw. Biegung des Rotorblattes 2 kommt, wandert das Bild 41b bzw. 42b an eine andere Stelle der Sensorebene, was von dem Sensor 35 festgestellt und an die Auswerteeinrichtung 4 gemeldet wird. Bei Erreichen unzulässig hoher Auslenkungswerte des Rotorblattes wird die Windenergieanlage stillgesetzt, um Beschädigungen der Rotorblätter vorzubeugen.

Der Schraubbolzen 13 im Zusammenwirken seines Schraubkopfes (oder seiner Mutter) mit der Zwischenplatte 10 und seines Schraubschaftes mit der Schraubbohrung im Gehäuseflansch 51 sowie die Druckfeder 14 im Zusammenwirken mit den Elementen 10 und 51 bilden gleichzeitig eine Befestigungseinrichtung und eine Abstandseinrichtung, während die Konterschraube 15 gewissermaßen eine Sicherungseinrichtung darstellt. Die Funktionen der Befestigung, der Abstandseinstellung und der Sicherung des Abstandes können auch in anderer Weise auf Befestigungselemente verteilt vorgenommen werden, um eine Dreipunkthalterung des Gehäuses 50 an der Zwischenplatte 10 zu verwirklichen. So ist es möglich, eine Befestigungsschraube mit kugeligem Ende zu verwenden, die mit dem kugeligen Ende in dem Gehäuseflansch oder einem anderen Teil des Gehäuses gehalten wird, während der Schraubschaft in der Zwischenplatte zur Abstandsveränderung verschraubt werden kann. Die Fixierung des eingestellten Abstandes erfolgt dann in ähnlicher Weise wie beschrieben mit einer Konterschraube oder einem anderen Klemmmittel.

## Patentansprüche

1. Windkraft-Rotor mit Messeinrichtung (3) der Rotordurchbiegung, umfassend
eine Nabe (1) mit wenigstens einem Rotorblatt (2), ein Hohlraum (5) zur Aufnahme der Messeinrichtung (3),
ein Messhohlraum (20), der sich in Längsrichtung des Rotorblattes erstreckt, und
eine Auswerteeinrichtung (4),
wobei die Messeinrichtung (3) einen Lichtstrahlsender (31) zur Aussendung mindestens eines Strahlenbündels in Längsrichtung des Messhohlraumes (20), mindestens eine im Rotorblatt untergebrachte Reflektoreinrichtung (33) und mindestens einen Empfänger (32) zum Nachweis reflektierten Lichtes aufweist,
wobei der Empfänger (32) in einem Gehäuse (50) untergebracht ist, das in dem Messeinrichtung-Hohlraum (5) befestigt ist,
**dadurch gekennzeichnet,**
**dass** das Gehäuse (50) an einer Zwischenplatte (10) befestigt ist und eine Ausrichtefläche (50a) aufweist, die der Zwischenplatte (10) mit Zwischenraum (12) gegenübersteht, und
**dass** sich an wenigstens drei Stellen des Zwischenraums (12) Einstellvorrichtungen (13, 14, 15) befinden, die den örtlichen Abstand der Ausrichtefläche (50a) von der Zwischenplatte (10) einzustellen ermöglichen, wobei
die Ausrichtefläche (50a) Teil eines Gehäuseflansches (51) ist und die Zwischenplatte (10) mit einem Ausschnitt (11) zur Aufnahme des Gehäuses (50) versehen ist.

2. Windkraft-Rotor nach Anspruch 1, wobei jede Einstelleinrichtung einen Befestigungsschraubbolzen (13), eine Druckfeder (14) und eine Konterschraube (15) umfasst, der Befestigungsschraubbolzen (13) durch eine Bohrung der Zwischenplatte (10) hindurch greift und in eine Schraubbohrung des Gehäuses (50) unter Zwischenlage der Druckfeder (14) eingreift und die Konterschraube (15) in einer Schraubbohrung der Zwischenplatte (10) sitzt und nach Justage des Gehäuses (50) in Anlage an der Ausrichtefläche (50a) gebracht wird.

3. Windkraft-Rotor nach einem der Ansprüche 1 oder 2, wobei das Gehäuse (50) Sender (31) und Empfänger (32) beherbergt.

4. Windkraft-Rotor nach einem der Ansprüche 1 bis 3, wobei der Empfänger (31) wenigstens eine Abbildungsoptik (36) enthält, welche die Reflektoreinrichtung (33) auf einen Sensor (35) abbildet, wobei die Abweichung des Reflektorbildes von einer neutralen Stellung als Biegung des Rotorblattes (2) interpretierbar ist.

5. Windkraft-Rotor nach Anspruch 4, wobei die Reflektoreinrichtung (33) zwei Retroreflektoren (41, 42) in unterschiedlichen Abständen von dem Empfänger (31) aufweist, die an unterschiedlichen Stellen des Sensors (35) abgebildet werden.

6. Windkraft-Rotor nach einem der Ansprüche 1 bis 5, wobei die Reflektoreinrichtungen jeweils Reflektorpaare (41, 42) enthalten, um die Torsion der Rotorblatter (2) messen zu können.

## Claims

1. Wind power rotor with a measuring device (3) for measuring rotor deflection comprising a hub (1) with at least one rotor blade (2), a cavity (5) for receiving the measuring device (3), a measuring cavity (20), which extends in a longitudinal direction of the rotor blade, and an analyzing device (4), wherein the measuring device (3) comprises a light beam transmitter (31) for transmitting at least one beam bundle in the longitudinal direction of the measuring cavity (20), at least one reflector device (33) accommodated in the rotor blade and at least one receiver (32) for detecting reflected light, wherein the receiver (32) is accommodated in a housing (50), which is located in the cavity (5) of the measuring device,
**characterized in that**
the housing (50) is connected to an intermediate plate (10) and comprises an aligning surface (50a), which is located opposite the intermediate plate (10) separated by an intermediate space (12)
and that at least three points of the intermediate space (12) adjusting devices (13, 14, 15) are located, which allow for adjusting the local distance of the aligning surface (50a) from the intermediate plate (10), wherein the aligning surface (50a) is part of a housing flange (51) and the intermediate plate (10) is provided with a cut out (11) to receive the housing (50).

2. Wind power rotor according to claim 1, **wherein** each adjusting device comprises a fastening stud (13), a compression spring (14) and a lock screw (15), the fastening stud (13) passes through a hole of the intermediate plate (10) and meshes with gears into a screw hole of the housing (50) via the intermediary of the compression spring (14) and the lock screw (15) is seated in the screw hole of the intermediate plate (10) and is brought into contact with the aligning surface (50a) after adjustment of the housing (50).

3. Wind power rotor according to one of claims 1 or 2, **wherein** the housing (50) accommodates transmitter (31) and receiver (32).

4. Wind power rotor according to one of claims 1 to 3, **wherein** the receiver (31) comprises at least one imaging optical system (36), which images the reflector device (33) onto a sensor (35), whereby a deviation of the rotor image from a neutral position provides an indication of a bending of the rotor blade (2).

5. Wind power rotor according to claim 4, **wherein** the reflector device (33) comprises two retro reflectors (41, 42) at different distances from the receiver (31), which are imaged at different points of the sensor (35).

6. Wind power rotor according to one of claims 1 to 5, **wherein** the reflector devices each comprises reflector pairs (41, 42) for measuring torsion of the rotor blades (2).

## Revendications

1. Rotor d'éolienne avec dispositif de mesure (3) de la déflexion du rotor, comprenant un moyeu (1) avec au moins une pale de rotor (2), une cavité (5) pour recevoir le dispositif de mesure (3),
une cavité de mesure (20), qui s'étend dans le sens longitudinal de la pale de rotor, et un dispositif d'évaluation (4), le dispositif de mesure (3) présentant un émetteur de faisceau lumineux (31) destiné à émettre au moins un faisceau lumineux dans le sens longitudinal de la cavité de mesure (20), au moins un dispositif réflecteur (33) logé dans la pale de rotor et au moins un récepteur (32) pour preuve de la lumière réfléchie, le récepteur (32) étant installé dans un boîtier (50), qui est fixé dans la cavité du dispositif de mesure (5), **caractérisé en ce que** le boîtier (50) est fixé à une plaque intermédiaire (10) et présente une surface d'alignement (50a), qui est située face à la plaque intermédiaire (10) avec l'espace intermédiaire (12), et **en ce que**, à au moins trois emplacements de l'espace intermédiaire (12), se trouvent des dispositifs de réglage (13, 14, 15) qui permettent de régler la distance locale entre la surface d'alignement (50a) et la plaque intermédiaire (10),
la surface d'alignement (50a) faisant partie d'une flasque de boîtier (51) et la plaque intermédiaire (10) étant pourvue d'une découpe (11) destinée à recevoir le boîtier (50).

2. Rotor d'éolienne selon la revendication 1, dans lequel chaque dispositif de réglage comprend un boulon fileté de fixation (13), un ressort de pression (14) et une contre-vis (15), le boulon fileté de fixation (13) passe à travers un trou de la plaque intermédiaire (10) et se met en prise dans un trou de vis du boîtier (50) avec interposition du ressort de pression (14) et la contre-vis (15) siège dans un trou de vis de la plaque intermédiaire (10) et est mise en place sur la surface d'alignement (50a) après réglage du boîtier (50).

3. Rotor d'éolienne selon l'une des revendications 1 ou 2, dans lequel le boîtier (50) loge l'émetteur (31) et le récepteur (32).

4. Rotor d'éolienne selon l'une des revendications 1 à 3, dans lequel le récepteur (31) contient au moins une optique de reproduction (36) qui reproduit le dispositif réflecteur (33) sur un détecteur (35), l'écart entre l'image du réflecteur et une position neutre pouvant être interprété comme une flexion de la pale de rotor (2).

5. Rotor d'éolienne selon la revendication 4, dans lequel le dispositif réflecteur (33) présente deux rétroréflecteurs (41, 42) à des distances différentes du récepteur (31) qui sont reproduits à différents emplacements du détecteur (35).

6. Rotor d'éolienne selon l'une des revendications 1 à 5, dans lequel les dispositifs réflecteurs contiennent chacun des paires de réflecteurs (41, 42) pour pouvoir mesurer la torsion des pales de rotor (2).
